# DEMANDE DE BREVET EUROPEEN

(11) **EP 0 581 671 A1**
(43) Date de publication de la demande: **02.02.1994**
(21) Numéro de dépôt: 93401949.8
(22) Date de dépôt: 27.07.1993
(51) Int. Cl.: G02B 6/42, G02B 6/30

(54) **Procédé de couplage d'une fibre optique à un composant optique sur un substrat commun**

(30) Priorité: 29.07.1992 FR 9209392
(71) Demandeur: ALCATEL CIT, F-75008 Paris (FR)
(72) Inventeur: Mousseaux, Daniel, F-91120 Palaiseau (FR); Gelly, Gérard, F-91290 la Norville (FR); Grard, Emmanuel, F-91240 St.Michel sur Orge (FR)
(74) Mandataire: El Manouni, Josiane

(57) **Abrégé**

Selon cette invention on utilise un excentrement (50) du coeur (10) d'une fibre de couplage (8) pour réaliser un réglage de la position verticale de ce coeur par une rotation (22) de cette fibre autour de son axe (24). Ce réglage est effectué avec maintien du contact de la fibre sur une face de référence horizontale (6) d'un substrat (4) portant par ailleurs une diode laser constituant le composant (2) auquel la fibre doit être couplée.

Cette invention s'applique notamment à la réalisation de têtes d'émission pour système de télécommunication à fibre optique.

## Description

La présente invention concerne le couplage d'une fibre optique à un composant optique tel qu'une diode laser semiconductrice ou une photodiode, sur un substrat commun, pour la constitution d'une tête d'émission ou de réception optique.

Un premier problème à résoudre pour la réalisation d'un tel couplage est l'obtention de faibles pertes de couplage, cette obtention nécessitant une grande précision de positionnement.

Selon un procédé de couplage connu le composant est d'abord fixé, typiquement par brasure, sur le substrat. Sa zone active est ainsi placée à une hauteur prédéterminée au dessus d'une face de référence de ce substrat. Cette hauteur est aussi exactement que possible celle à laquelle sera placé le coeur d'une fibre optique de couplage, à une extrémité de cette fibre, lorsqu'une surface de manipulation cylindrique solidaire de cette fibre sera placée en appui de cette face de référence.

Cette surface de manipulation est constituée par une ferrule cylindrique de révolution. La fibre est placée dans cette ferrule parallèlement à l'axe de celle-ci, mais dans une position excentrée. Ceci permet de régler la position verticale c'est-à-dire de corriger un éventuel écart de hauteur entre la zone active du composant et le coeur de la fibre. Il suffit pour cela de faire tourner la ferrule autour de son axe en la maintenant en appui contre la face de référence. Compte tenu de la précision de position nécessaire à un bon couplage, cette ferrule doit être réalisée avec une grande précision.

Par ailleurs des réglages transversal et longitudinal sont effectués par déplacement de la ferrule au contact de la face de référence avant la fixation définitive de la fibre de couplage au substrat.

La fibre de couplage est typiquement de courte longueur pour faciliter les divers réglages et manipulations. Après sa fixation au substrat elle est soudée à son autre extrémité à une fibre à coupler de plus grande longueur. Les procédés de soudure connus sont tels que la soudure ainsi réalisée n'introduit que de faibles pertes de lumière.

Un deuxième problème à résoudre généralement lors d'un couplage est de donner des dimensions aussi faibles que possible à la tête optique qui contient le composant, un tronçon de la fibre de couplage et les éléments nécessaires à leur couplage. On choisit pour cela un substrat de dimensions limitées.

La présente invention a notamment pour but de permettre l'obtention d'un bon couplage entre un composant optique et une fibre de couplage au sein d'une tête optique de dimensions et de coût limités.

Dans ces buts elle a pour objet un procédé de couplage d'une fibre optique à un composant optique sur un substrat commun, ce procédé utilisant un excentrement du coeur d'une fibre optique constituant une fibre de couplage par rapport à une surface cylindrique de manipulation de cette fibre de couplage, un réglage de la position verticale de ce coeur étant réalisé par une rotation de cette fibre de couplage autour de l'axe de cette surface de manipulation en combinaison avec un maintien d'un appui de cette suface de manipulation sur une face de référence horizontale du substrat portant par ailleurs le composant auquel cette fibre de couplage doit être couplée, ce procédé étant caractérisé par le fait que ladite surface de manipulation est la surface périphérique de la gaine optique de la fibre de couplage.

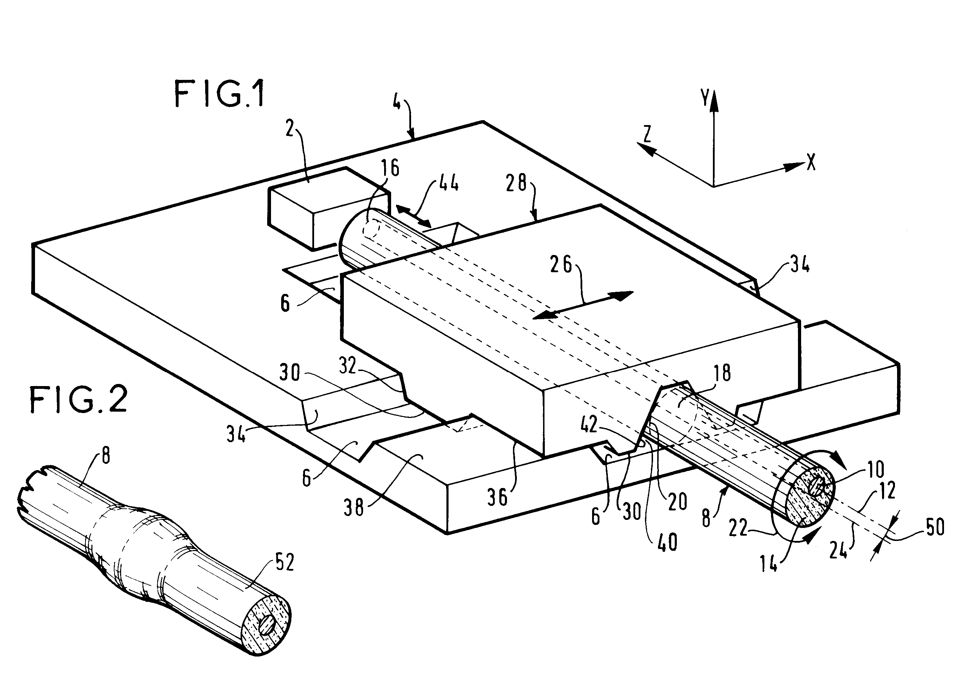

A l'aide de la figure schématique ci-jointe, on va décrire ci-après comment la présente invention peut être mise en oeuvre, étant entendu que les éléments et dispositions mentionnés et représentés ne le sont qu'à titre d'exemples non limitatifs.

Cette figure représente une vue en perspective d'un dispositif de mise en oeuvre du procédé selon cette invention.

De manière générale le procédé donné en exemple comporte les opérations suivantes qui lui sont communes, quant à leurs fonctions indiquées ci-après, avec des procédés connus.
- Fixation d'un composant 2 à un substrat rigide 4 qui est disposé par exemple horizontalement. Ce substrat présente alors deux directions, longitudinale Z et transversale X, toutes deux horizontales, et une direction verticale Y. Il possède une face de référence 6, cette face étant horizontale et supérieure, et située plus bas que ce composant.Ce dernier est par exemple une diode laser. Les directions et orientations de faces sont bien entendu définies par rapport au substrat pour permettre la description.
- Mise en place préalable d'une fibre optique 8 au voisinage de sa future position de couplage, au-dessus de cette face de référence 6. Dans le cas typique où la fibre à coupler est une fibre de grande longueur, le mot "fibre" désignera ci-après non pas la fibre à coupler, mais seulement un segment d'extrémité d'une fibre de couplage relativement courte à l'autre extrémité de laquelle la fibre à coupler sera raccordée ultérieurement. Lors de cette mise en place la fibre est orientée en disposant sa longueur selon ladite direction longitudinale. Elle comporte un coeur 10 présentant un axe de coeur longitudinal 12 et entouré par une gaine optique 14, un couplage optique étant à réaliser par mise d'une extrémité 16 de ce coeur dans une position de couplage par rapport au composant 2. Elle présente une surface de manipulation 18 par appui sur laquelle elle peut être déplacée ou maintenue. Cette surface est cylindrique à génératrices longitudinales. Elle est plus particulièrement constituée par la surface périphérique de la gaine optique 14 de la fibre.
- Réglages des positions longitudinale, transversale et verticale de la fibre par rapport au substrat 4 pour réaliser le couplage souhaité. Au moins les réglages de positions transversale et verticale de la fibre sont réalisés par appui sur la surface de manipulation 18.
- Enfin, fixation de la fibre 8 au substrat 4 pour rendre ce couplage permanent.

Selon la présente invention la surface de manipulation 18 présente une section 20 s'écartant d'un cercle centré sur l'axe de coeur 12 de la fibre 8. Cette section est plus particulièrement circulaire mais elle pourrait être par exemple elliptique ou ovoïde. Un excentrement souhaité est représenté en 50 entre l'axe de coeur 12 et un axe longitudinal de fibre 24 qui est celui de la surface de manipulation cylindrique de révolution 18.

L'opération de mise en place préalable de la fibre 8 comporte alors une mise de cette surface de manipulation en appui sur la face de référence 6, et l'opération de réglage de la position verticale de cette fibre est réalisée par une rotation 22 de cette fibre autour d'un axe longitudinal tel que l'axe 24. Cette rotation est réalisée en association avec un maintien de cette surface de manipulation en appui sur cette face de référence.

Cette rotation, de même que d'autres déplacements de réglage, est symbolisée sur la figure par une flèche double.

Dans le cas préféré et donné en exemple d'une fibre 8 à section circulaire, lors d'au moins lesdites opérations de réglage des positions verticale 22 et transversale 26 de la fibre, un guide fibre 28 est placé sur cette fibre et le substrat 4.

Une face inférieure 30 de ce guide fibre présente les surfaces suivantes:
- Des surfaces de guidage primaires mobiles 32 coopérant avec des surfaces de guidage primaires fixes 34 portées par le substrat 4. Certaines au moins de ces surfaces de guidage primaires présentent des génératrices transversales, c'est-à-dire parallèles à la direction transversale, et elles s'écartent de surfaces horizontales pour permettre à ce guide fibre 28 des déplacements transversaux 26 tout en lui interdisant tout déplacement longitudinal et toute rotation autour d'axes verticaux. Elles sont par exemple constituées par des faces planes parallèles à la direction transversale. On constitue ainsi un rail de guidage transversal.
- Des surfaces d'appui mobiles 36 s'appuyant sur des surfaces d'appui fixes 38 portées par le substrat 4. Certaines au moins de ces surfaces d'appui présentent elles aussi des génératrices transversales. Elles sont par exemple constituées par des faces planes parallèles à cette direction. Elles s'écartent de surfaces verticales pour interdire à ce guide fibre tout déplacement vertical et toute rotation autour d'axes horizontaux lors de ses dits déplacement transversaux. Ces surfaces d'appui sont plus particulièrement horizontales.
- Un canal 40 de guidage et d'appui de fibre formé en creux et présentant des parois 42 à génératrices longitudinales, c'est-à-dire parallèles à la direction longitudinale, et par exemple planes, venant en appui sur la surface de manipulation 18. Ces parois s'écartent de surfaces horizontales. Elles constituent des surfaces de guidage de fibre 42 venant au contact de la surface de manipulation pour interdire à la fibre 8 tout déplacement transversal relatif par rapport à ce guide fibre et toute rotation autour d'axes verticaux.

Par ailleurs certaines de ces parois s'écartent de surfaces verticales pour constituer des surfaces d'appui de fibre venant au contact de la surface de manipulation. Elles coopérent avec la face de référence 6 pour interdire à cette fibre tout déplacement vertical et toute rotation autour d'axes transversaux tant que les surfaces d'appui mobiles 36 sont au contact des surfaces d'appui fixes 38. Plus particulièrement ces surfaces d'appui de fibre sont constituées par deux flancs obliques 42 du canal 40, ces deux flancs constituant aussi, comme indiqué ci-dessus, lesdites surfaces de guidage de fibre.

Le réglage de la position transversale de la fibre est alors réalisée par un déplacement transversal 26 du guide-fibre 28.

Typiquement, chacune desdites opérations de réglage des positions transversale et verticale de la fibre 8 comporte une succession de réglages partiels jusqu'à des réglages finals transversaux et verticaux, respectivement.

Dans ce cas on effectue les opérations de réglage dans l'ordre suivant avec utilisation du guide fibre 28:
- Réglage de position longitudinale selon la double flèche 44,
- et une succession de réglages partiels composites constitués chacun d'un réglage partiel vertical 22 suivi par un réglage partiel transversal 26.

Dans ce cas ladite opération de fixation de la fibre 8 au substrat 4 comporte, après le réglage vertical final et avant le réglage transversal final, une opération de fixation partielle pour fixer cette fibre au gui- ide fibre 28.

Après le réglage transversal final une autre opération de fixation partielle fixe ce guide-fibre au substrat 4.

Ces diverses opérations de fixation sont réalisées par collage.

La fibre 8 précédemment mentionnée constitue une fibre de couplage choisie pour permettre de réaliser un bon couplage au composant 2 par les opérations indiquées ci-dessus. Elle est choisie en même temps telle que la grandeur de l'excentrement souhaité 50 autorise un raccordement optique efficace de cette fibre de couplage à une fibre à coupler de grande longueur par soudure bout à bout de ces deux fibres. Le procédé comporte alors en outre, après la fixation de la fibre de couplage 8 au substrat, une soudure de la fibre à coupler 52 (voirfigure 2) à cette fibre de couplage. La fibre à coupler 52 possède typiquement un coeur centré qui n'est donc pas dans l'alignement de celui de la fibre de couplage 8. Cependant, l'excentrementsouhaité 50, qui peut être par exemple voisin de 2 f..lm dans le cas typique des fibres ayant un diamètree de 125 f..lm, est tel que cette soudure réalisée à l'aide d'une machine du commerce, telle que la machine VSM de la société française Mars-Actel, n'introduit pas de pertes de lumière supérieures à celles qui sont introduites par une soudure entre deux fibres à coeur centrés et qui sont tout à fait acceptables (....dB).

Par ailleurs, un tel excentrement est suffisant pour corriger les erreurs qui peuvent apparaître, lors de la fixation du composant 2, quant à la hauteur de la zone active de ce dernier au-dessus de la face de référence.

Ces erreurs sont en effet typiquement liées seulement à des erreurs d'épaisseur de couches semiconductrices déposées épitaxialement lors de la fabrication du composant 2, à des erreurs sur l'épaisseur de la brasure qui fixe ce composant au substrat et à des erreurs sur la profondeur de la gravure qui forme la face de référence et qui est réalisée par attaque ionique réactive (en anglais "Reactive Ion Etchnig".

Enfin, il est facile et peu coûteux d'obtenir une fibre de couplage convenable. La valeur d'excentrement indiquée ci-dessus est en effet typique pour des fibres fabriquées par les procédés actuels.

De préférence le substrat 4 et le guide-fibre 28 sont constitués de silicium monocristallin, certaines au moins des surfaces d'appui et/ou de guidage 32, 34, 36, 38, 42 et face de référence 6 étant formées selon des plans cristallographiques privilégiés de ces éléments.

## Revendications

1/ Procédé de couplage d'une fibre optique à un composant optique sur un substrat commun, ce procédé utilisant un excentrement (50) du coeur (10) d'une fibre optique constituant une fibre de couplage (8) par rapport à une surface cylindrique de manipulation de cette fibre de couplage, un réglage de la position verticale de ce coeur étant réalisé par une rotation (22) de cette fibre de couplage autour de l'axe (24) de cette surface de manipulation en combinaison avec un maintien d'un appui de cette suface de manipulation sur une face de référence horizontale (6) du substrat (4) portant par ailleurs le composant (2) auquel cette fibre de couplage doit être couplée, ce procédé étant caractérisé par le fait que ladite surface de manipulation (18) est la surface périphérique de la gaine optique (14) de la fibre de couplage (8).

2/ Procédé selon la revendication 1, comportant les opérations suivantes:
- réalisation d'un substrat rigide (4) présentant une face de référence (6) supérieure et horizontale,
- fixation dudit composant (2) sur ce substrat à une hauteur prédéterminée au dessus de cette face de référence,
- choix d'une fibre optique ayant une gaine optique en silice (14) présentant une épaisseur adaptée à ladite hauteur prédéterminée du composant au dessus de la face de référence, une surface latérale de cette gaine constituant une surface de manipulation (18) de cette fibre et ayant un axe (24) constituant un axe de cette fibre, cette fibre ayant un coeur (10) présentant un excentrement souhaité (30) par rapport à cet axe, cette fibre constituant ladite fibre de couplage (8),
- mise en appui de cette fibre de couplage (8) par sa dite surface de manipulation (18) sur ladite face de référence (6),
- positionnement de cette fibre de couplage sur cette face de référence pour permettre un couplage optique au moins imparfait de cette fibre au dit composant (2),
- et réglage de position verticale par rotation de cette fibre (8) autour de son axe (24) pour améliorer ledit couplage optique.

3/ Procédé selon la revendication 2, dans lequel une fibre à coupler audit composant (2) est différente de ladite fibre de couplage (8), cette dernière étant choisie pour que la grandeur dudit excentrement souhaité (50) autorise un raccordement optique efficace de cette fibre de couplage à cette fibre à coupler (52) par soudure bout à bout de ces deux fibres, ce procédé comportant en outre :
- une fixation de ladite fibre de couplage (8) audit susbstrat (4),
- et une dite soudure de la fibre à coupler (52) à cette fibre de couplage.

4/ Procédé selon la revendication 2, dans lequel ladite surface de manipulation (18) est cylindrique de révolution.

5/ Procédé selon la revendication 4 dans lequel ledit
substrat rigide (4) présente des directions longitudinale (8) et transversale (X) toutes deux horizontales et une direction verticale (Y),
ledit positionnement de la fibre de couplage (8) orientant une longueur de cette fibre selon ladite direction longitudinale, et comportant des réglages des positions longitudinale et transversale de cette fibre,
- un guide-fibre (28) étant placé sur cette fibre optique (8) et ledit substrat (4) lors d'au moins lesdites opérations de réglage des positions verticale (22) et transversale (26) de la fibre, une face inférieure (30) de ce guide-fibre présentant:
- des surfaces de guidage primaires mobiles (32) coopérant avec des surfaces de guidage primaires fixes (34) portées par ledit substrat (4), certaines au moins de ces surfaces de guidages primaires étant à génératrices transversales et s'écartant de surfaces horizontales pour permettre à ce guide fibre (28) des déplacements transversaux (26) tout en lui interdisant tout déplacement longitudinal et toute rotation autour d'axes verticaux,
- des surfaces d'appui mobiles (36) s'appuyant sur des surfaces d'appui fixes (38) portées par ledit substrat (4) certaines au moins de ces surfaces d'appui étant à génératrices transversales et s'écartant de surfaces verticales pour interdire à ce guide-fibre tout déplacement vertical et toute rotation autour d'axes horizontaux lors de ses dits déplacements transversaux,
- un canal (40) de guidage et d'appui de fibre formé en creux et présentant des parois (42) à génératrices longitudinales venant en appui sur ladite surface de manipulation (18) de la fibre optique (8), certaines de ces parois s'écartant de surfaces horizontales pour constituer des surfaces de guidage de fibre (42) interdisant à ladite fibre optique tout déplacement transversal relatif par rapport à ce guide-fibre et toute rotation autour d'axes verticaux, certaines de ces parois s'écartant de surfaces verticales pour constituer des surfaces d'appui de fibre (42) coopérant avec ladite face de référence (6) pour interdire à cette fibre tout déplacement vertical et toute rotation autour d'axes transversaux tant que lesdites surfaces d'appui mobiles sont au contact desdites surfaces d'appui fixes,
- ladite opération de réglage de la position transversale de la fibre étant réalisée par un dit déplacement transversal (26) du guide-fibre (28).

6/ Procédé selon la revendication 5, caractérisé par le fait que lesdites opérations de réglage sont effectuées dans l'ordre suivant en présence dudit guide-fibre (28):
- réglage de position longitudinale (44),
- et une succession de réglages partiels composites comportant chacun un réglage partiel vertical (22) suivi par un réglage partiel transversal (26).

7/ Procédé selon la revendication 6, caractérisé par le fait qu'il comporte, après un réglage vertical final et avant un réglage transversal final, une opération de fixation partielle pour fixer ladite fibre optique (8) audit guide-fibre (28), et, après ledit réglage transversal final une autre opération de fixation partielle pour fixer ce guide-fibre audit substrat (4).

8/ Procédé selon la revendication 7, dans lequel lesdites opérations de fixation sont réalisées par collage. 9/ Procédé selon la revendication 5, caractérisé par le fait que lesdits substrat (4) et guide-fibre (28) sont constitués de silicium monocristallin, certaines au moins desdites surfaces d'appui et/ou de guidage (32, 34, 36, 38, 42) et face de référence (6) étant formées selon des plans cristallographiques privilégiés.
